# EUROPEAN PATENT APPLICATION

(11) **EP 0 895 922 A1**
(43) Date of publication of application: **10.02.1999**
(21) Application number: 98306218.3
(22) Date of filing: 04.08.1998
(51) Int. Cl.: B62B 7/14

(54) **Child transporter**

(30) Priority: 08.08.1997 GB 9716717
(71) Applicant: BRITAX-TEUTONIA Kinderwagenfabrik GmbH, D-32112 Hiddenhausen (DE)
(72) Inventor: Maxisch, Peter, 33106 Paderborn (DE)
(74) Representative: Hollinghurst, Antony

(57) **Abstract**

A pram or pushchair has a body is secured to parallel rails (30) of a chassis by detent projections (50, 52, 54, 56) which extend laterally from each side of the body and engage in slots (60, 62, 64, 66) in the parallel rails (30). Each slot (60, 62, 64, 66) has a vertical portion (72) leading downwardly from the top edge of its rail and a horizontal portion (70) extending along the rail from the bottom end of the vertical portion (72). A manually disengageable blocker means (80) on one of the rails (30) is resiliently biased into engagement with a corresponding detent projection (50) so as to obstruct displacement thereof along the horizontal portion (70) of the slot (60) towards the vertical portion (72) thereof. The blocker (80) is arranged to be displaced out of its blocking position by the corresponding detent projection (50) during insertion down the vertical portion (72) of the slot (60).

## Description

This invention relates to a child transporter such as a pram or pushchair of the type having a body, a chassis including a pair of parallel rails on which the body is supported and respective detent projections extending laterally from each side of the body and each adapted to engage with a respective slot in the corresponding parallel rail to secure the body to the chassis, each slot having a vertical portion leading downwardly from the top edge of its rail and a horizontal portion extending along the rail from the bottom end of the vertical portion and the detent projections being positioned relative to one another so as to be simultaneously insertable down the vertical portion of the corresponding slot and then displaced along the horizontal portion of such slot, and manually disengageable blocking means on at least one of the rails being movable into a blocking position in which it engages with a corresponding detent projection so as to obstruct displacement thereof along the horizontal portion of the slot towards the vertical portion thereof.

A pram of this type is disclosed in GB-A-2056376.

According to the invention, in a child transporter of the type described above, the blocking means is resiliently biased into said blocking position and is arranged to be displaced out of its blocking position by the corresponding detent projection during insertion down the vertical portion of the slot.

This arrangement the latch means engage automatically when the pram or pushchair is placed on the chassis.

The vertical portion of each slot may have one of its side walls inclined to the vertical so that the upper end thereof is wider than the lower end. This facilitates alignment of the body with the chassis.

Preferably, respective blocking means are provided on each of the two side rails.

An embodiment of the invention will now be described, by way of example, with reference to the accompanying drawings, in which:
Figure 1 is a perspective view of a pram in accordance with the invention, with the body secured to the chassis;
Figure 2 is a perspective view, similar to Figure 1, but with the body removed from the chassis;
Figure 3 is an exploded perspective view of the latch mechanism on one of the side rails of the chassis shown in Figures 1 and 2;
Figure 4 is a perspective view from the other side of the mechanism shown in Figure 3 in an intermediate position during engagement;
Figure 5 is a perspective view, similar to Figure 4, showing the latch member fully engaged;
Figure 6 is a cross-sectional view, on a vertical transverse plane, of the latch mechanism in the position shown in Figure 4, fitted with an alarm; and
Figure 7 is a cross-sectional view, similar to Figure 6, but with the mechanism in the position shown in Figure 5.

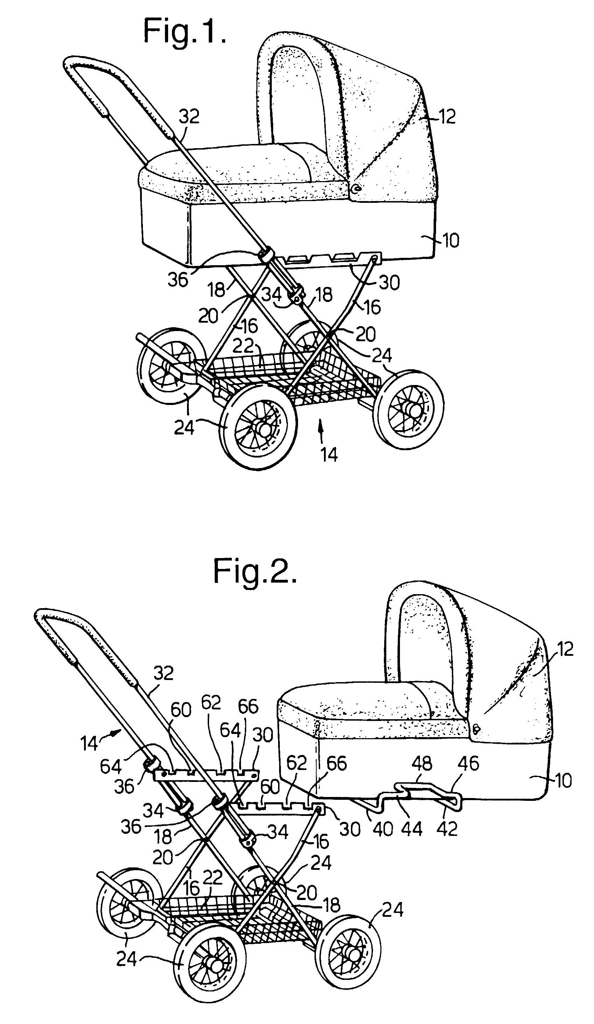

Referring to Figure 1, a pram has a body 10 with a hood 12 supported on a chassis 14. The chassis 14 is of known type, having a pair of side frames, each of which comprises a pair of support members 16 and 18 which are interconnected at their midpoint by a pivot joint 20, and have wheels 24 on their lower ends. The support member 16 which extends upwardly from a rear wheel 24, has its upper end pivotally connected to the front end of a horizontal rail 30, the rear end of which is pivotally connected to a hand 32. The bottom end of the handle 32 is connected by a pivot joint 34 to the side member 18 at an intermediate position between its upper end and the pivot joint 20. A clip 36 secures the handle 32 parallel to the member 18 when the chassis 14 is in its erected position. Release of the catch 18 allows the handle 32 to pivot forwardly, allowing the chassis to be folded. A folding chassis of this type is already known and the folding action will not be described further.

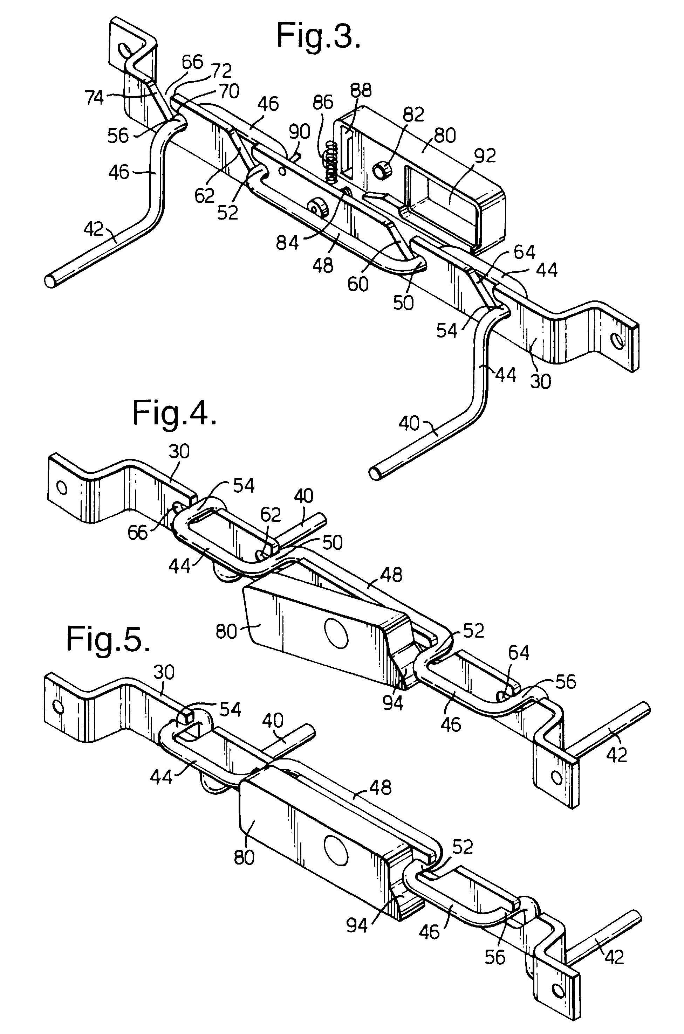

Referring to Figure 2, the body 10 is mounted on a subframe comprising two mutually parallel transverse members 40 and 42 which are interconnected at each end by a side member consisting of outwardly extending end portions 44 and 46 and an inwardly displaced central portion 48. As can be seen from Figure 3, the end portions 44 and 46 are connected to the central portion 48 by respective intermediate transverse links 50 and 52 and to the transverse members 40 and 42 by respective end transverse links 54 and 56. When the body 10 is positioned on the chassis 14, the intermediate transverse links 50 and 52 engage in respective intermediate notches 60 and 62 in the rail 30. The end transverse members 54 and 56 engage in similar end notches 64 and 66.

The notch 66 has a horizontal portion 70 which is connected by a vertical portion 72 to the top edge of the rail 30. The side wall 74 of the vertical portion 72 opposite to the horizontal portion 70 72 is inclined so that the top of the vertical portion 72 is wider than the bottom thereof thereby facilitating alignment of the link 56 as the pram body is lowered on to the chassis 14. The other notches 60, 62 and 64 are of identical shape.

A blocker 80, in the form of a plastics moulding, has a boss 82 by which it is pivotally mounted on a stud 84 secured to the rail 30. In order to bias the blocker 80 in the counter-clockwise direction (as viewed in Figure 3) a compression spring 86 is received in a pocket 88 in the blocker so as to engage between the bottom of the pocket 88 and a stop 90 which is secured to the rail 30. When the blocker 80 is horizontal, the stop 90 abuts against the top of the pocket 88. The blocker 80 also has a second pocket 92 for accommodating an alarm (not shown in Figure 3) as will be described hereinafter.

The mechanism on the rail 30 on the opposite side of the chassis is substantially the same.

Referring to Figure 4, when it is desired to secure the pram body 10 to the chassis 14, the transverse links 50, 52, 54 and 56 are positioned in their tops of their respective notches and the chassis pressed downwards. The transverse link 50 presses on the top of the blocker 80, pivoting it to the position shown in Figure 4 when the transverse links 50, 52, 54 and 56 have reached the bottoms of the vertical portions 72 of their respective slots 60, 62, 64 and 66. Further angular movement of the blocker 80 in the counter-clockwise (as viewed in Figure 4) is prevented by abutment with a curved projection 94 thereon with the transverse link 52.

The pram body 10 can then be slid on the rail 30 to bring the transverse links 50, 52, 54 and 56 to the closed ends of the horizontal portions 70 of their respective notches. The blocker 80 is then displaced back to its horizontal position, both by the compression spring 86 and by the curved projection, 94 so as to prevent disengagement of the links from their respective notches as illustrated in Figure 5.

When it is desired to remove the body 10 from the chassis 14, the left-hand end (as viewed in Figure 5) of the blockers 80 on both sides of the chassis are manually pressed downwards simultaneously so as to displace them to the position shown in Figure 4, in which the links 50, 52, 54 and 56 can slide along the horizontal portions 70 of the notches 60, 62, 64 and 66, thus allowing the body 10 to be lifted off the chassis 14.

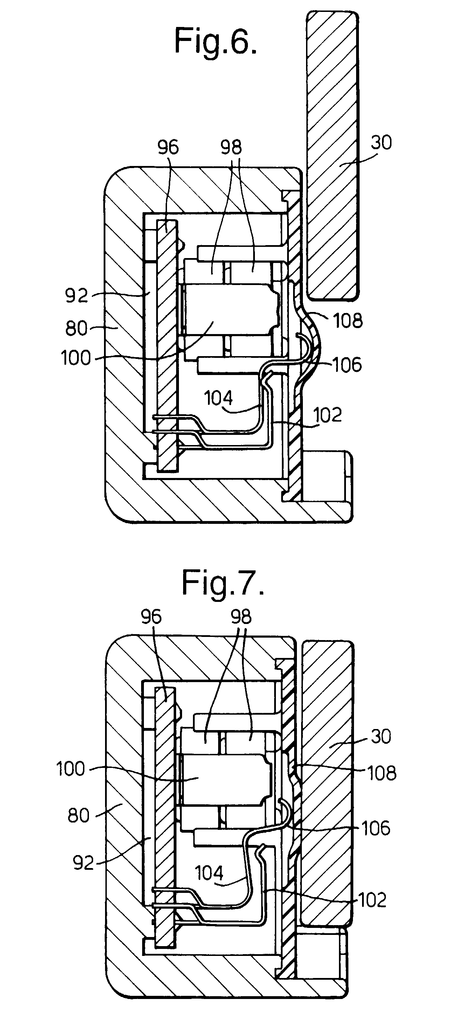

Referring to Figure 6, a printed circuit board 96 is mounted in the pocket 92. The circuit board 96 carries batteries 98, which are retained by a clip 100, a fixed contact 102 and a resilient moving contact 104. The moving contact has an end portion which abuts against the inside of a flexible water-proof membrane 108 which covers the pocket 92. When the blocker 80 is displaced to the position shown in Figures 4 and 6 against the action of the spring 86 (Figure 2), the contacts 102 and 104 are closed. When the blocker 80 is in the position shown in Figures 5 and 7, the contacts 102 and 104 are open.

The circuit board 96 may have either of two electronic circuits. The simpler circuit sounds an audible alarm as soon as the contacts 102 and 104 close e.g. when the body 10 is placed on the chassis 14. The alarm is silenced either when the contacts 102 and 104 reopen, indicating that the body 10 is securely fastened to the chassis 14, or after a predetermined time (e.g. 2 minutes) to prevent undue battery drain if the blocker becomes wedged in the position shown in Figures 4 and 6 during storage.

The more complex circuit has an additional timing function which inhibits the alarm for a short time (e.g. 30 seconds) from when the contacts 102 and 104 close. With this circuit, instead of the alarm sounding every time the body 10 is fastened onto the chassis 14 or removed therefrom, the alarm sounds only if there is any delay in returning the blocker 80 to its normal position during such operations, thereby further reducing unnecessary battery drain.

## Claims

1. A child transporter having a body (10), a chassis (14) including a pair of parallel rails (30) on which the body is supported and respective detent projections (50, 52, 54, 56) extending laterally from each side of the body (10) and each adapted to engage with a respective slot (60, 62, 64, 66) in the corresponding parallel rail (30) to secure the body (10) to the chassis (14), each slot (60, 62, 64, 66) having a vertical portion (72) leading downwardly from the top edge of its rail and a horizontal portion (70) extending along the rail from the bottom end of the vertical portion (72) and the detent projections (50, 52, 54, 56) being positioned relative to one another so as to be simultaneously insertable down the vertical portion (72) of the corresponding slot (60, 62, 64, 66) and then displaced along the horizontal portion (70) of such slot (60, 62, 64, 66), and manually disengageable blocking means (80) on at least one of the rails (30) being movable into a blocking position in which it engages with a corresponding detent projection (50) so as to obstruct displacement thereof along the horizontal portion (70) of the slot (60) towards the vertical portion (72) thereof, characterised in that the blocking means (80) is resiliently biased into said blocking position and is arranged to be displaced out of its blocking position by the corresponding detent projection (50) during insertion down the vertical portion (72) of the slot (60).

2. A child transporter according to claim 1, characterised in that the vertical portion (72) of each slot (60, 62, 64, 66) has one of its side walls (74) inclined to the vertical so that the upper end thereof is wider than the lower end.

3. A child transporter according to claim 1 or 2, characterised in that the blocking means comprises a blocking member (80) which is pivotally mounted on an axle (84) secured to the rail (30) and resiliently biased into its blocking position.

4. A child transporter according to claim 5, characterised in that the blocking member (80) is resiliently biased into its blocking position by a compression spring (86) mounted in a pocket (88) in the blocking member (80).

5. A child transporter according to any preceding claim, characterised in that respective blocking means (80) are provided on each of the two rails (30).
